**Europäisches Patentamt**

(19) **European Patent Office**

**Office européen des brevets**

(11) Numéro de publication: **0 148 052**
**B1**

(12) **FASCICULE DE BREVET EUROPÉEN**

(45) Date de publication du fascicule du brevet:
02.09.87

(51) Int. Cl.⁴: **F 16 D 1/08**

(21) Numéro de dépôt: **84402434.9**

(22) Date de dépôt: **29.11.84**

(54) **Moyen de fixation d'un joint d'étanchéité sur l'arbre d'une turbomachine.**

(30) Priorité: **21.12.83 FR 8320438**

(43) Date de publication de la demande:
**10.07.85 Bulletin 85/28**

(45) Mention de la délivrance du brevet:
**02.09.87 Bulletin 87/36**

(84) Etats contractants désignés:
**DE FR GB**

(56) Documents cité:
**DE-B-1 042 309**
**DE-C-106 838**
**DE-C-567 306**
**FR-A-403 159**
**FR-A-578 992**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Bariaud, Christian, 19, avenue des Lacs, 91400 Orsay (FR)**
Inventeur: **Delonge, Jean- Claude, 13, rue Pasteur, 91100 Corbeil- Essonnes (FR)**

(74) Mandataire: **Moinat, François, S.N.E.C.M.A. Service des Brevets Boîte Postale 81, F-91003 Evry Cedex (FR)**

## Description

L'invention porte sur un moyen de liaison entre deux éléments cylindriques emboîtés l'un dans l'autre grâce à auquel ces deux éléments sont immobilisés l'un par rapport à l'autre aussi bien en translation qu'en rotation. L'invention concerne en particulier la fixation d'un joint labyrinthe sur un arbre de turbomachine.

Le fonctionnement des turbomachines met en jeu des fluides à différents niveaux de pression entre des zones séparées par des éléments coaxiaux rotatifs entre eux qui sont le siège de débits de fuite de la haute vers la basse pression au droit des joints d'étanchéité. La qualité de tels joints d'étanchéité est déterminante pour les performances de la turbomachine car l'importance des débits de fuite a un effet direct sur le rendement global de la machine et en particulier sur la consommation spécifique.

De tels joints, lorsqu'ils sont du type à labyrinthe, sont constitués d'une série de dents ou léchettes de forme annulaire montées parallèlement entre elles à la périphérie de l'un des éléments mobiles par rapport à l'autre, l'arête de ces léchettes ménageant un jeu déterminé avec une surface d'étanchéité, rapportée sur l'autre élément.

Les léchettes sont susceptibles d'usure ou de détérioration lorsqu'elles viennent frotter inopportunément la surface d'étanchéité, en cours de fonctionnement. Il est alors nécessaire de les réparer ou de les remplacer.

Dans l'application où les joints labyrinthes sont montés sur l'arbre ou le tambour de la turbomachine, les léchettes étaient généralement obtenues par usinage dans la masse si bien qu'on ne pouvait remplacer les léchettes qu'en changeant l'arbre complètement. Pour cette raison, on préfère usiner les léchettes dans des viroles cylindriques épaisses que l'on fixe sur l'arbre par boulonnage. On peut ainsi les remplacer et les réparer aisément lorsque c'est nécessaire. Un exemple d'un tel montage est donné dans le document FR-A-578 992, représentatif de l'état de la technique tel que contenu dans le préambule de la revendication principale de la présente demande.

Dans les moteurs modernes, toutefois, on s'efforce de réduire le nombre de liaison boulonnées dans les enceintes dont une paroi est constituée par un élément rotatif, car le frottement de ces boulons sur le fluide de l'enceinte provoque un "barattage" et un échauffement interne préjudiciable à la tenue des éléments en présence.

L'invention a pour objet un moyen de fixation d'un joint d'étanchéité en forme de virole cylindrique sur un arbre de turbomachine, dont aucune partie ne constitue en elle-même d'aspérité ou de protubérance entrainant un échauffement par friction avec le milieu ambiant.

Selon une caractéristique essentielle de l'invention, ce moyen est constitué par un segment en forme de secteur d'anneau interposé entre le joint et l'arbre; ce segment est en appui par une face contre la paroi du joint et s'emboîte dans une gorge de forme complémentaire à lui, ménagée dans la paroi de l'arbre. La dimension radiale du segment et de la gorge varie circonférentiellement de sorte que le segment est bloqué dans la gorge aussi bien en rotation qu'en translation. Le segment est immobilisé par rapport au joint au moyen de pions rayonnants.

Selon un mode de réalisation préféré de l'invention, la gorge est ménagée dans la paroi de l'arbre et a la forme d'une surface torique excentrée par rapport à l'axe commun des éléments et, le segment est un secteur d'anneau symétrique par rapport à sa section transversale d'épaisseur maximale correspondant à la profondeur maximale de la gorge.

Un des avantages supplémentaires d'un tel moyen de liaison est de conserver l'intégrité de l'arbre; grâce à ce moyen on évite les perçages qu'aurait nécessités une liaison par boulonnage ceci est un facteur important de tenue mécanique.

Un autre avantage est la répartition sur une plus grande surface des efforts transmis à l'arbre par le joint lorsqu'il frotte contre l'élément d'étanchéité adjacent. On évite ainsi les surcontraintes locales.

D'autres caractéristiques et avantages ressortiront de la description détaillée qui suit donnant un mode de réalisation préféré de l'invention en relation avec les dessins annexés sur lesquels:

- la figure 1 représente une portion d'arbre de turbomachine au niveau d'un joint labyrinthe avec des parties arrachées dévoilant les éléments de fixation,

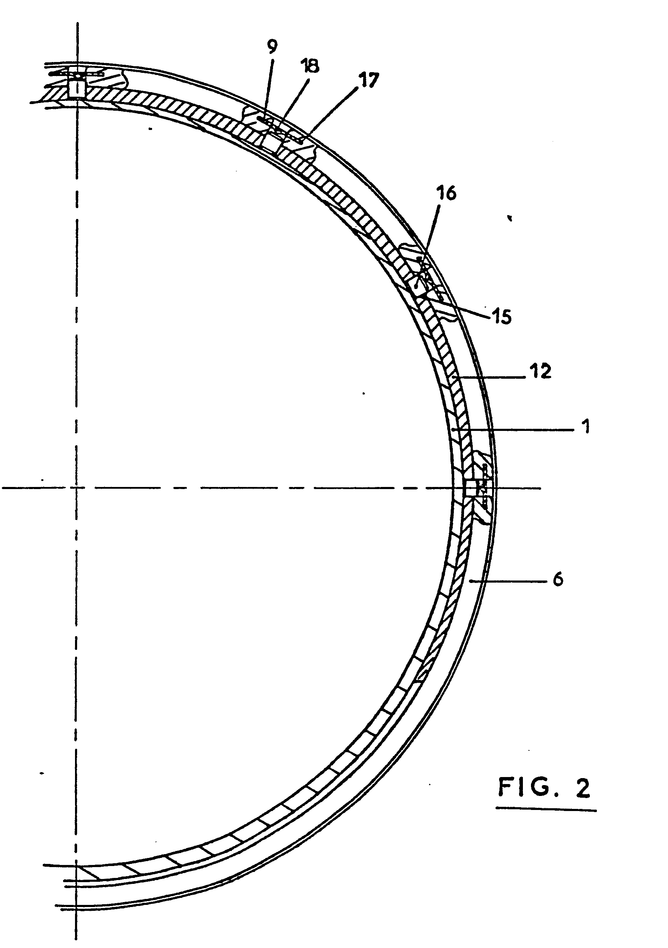

- la figure 2 est une vue en demie-coupe transversale de la figure 1 selon II,

- la figure 5 représente une variante de la virole du joint labyrinthe.

Dans un but de clarté, les éléments non nécessaires à la bonne compréhension de l'invention n'ont pas été représentés.

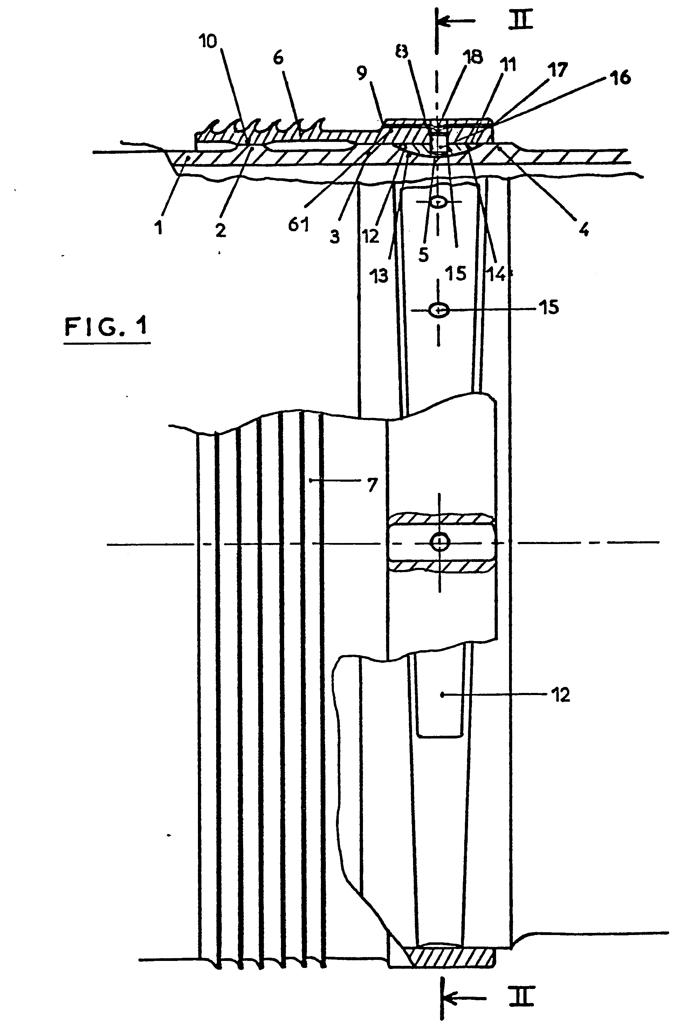

Sur la figure 1, la référence 1 désigne un arbre de turbomachine; cet arbre traversant les parois d'enceinte à différents niveaux de pression, par exemple les parois d'enceintes de palier ou bien les diaphragmes séparant les étages de compresseur ou de turbine, des moyens d'étanchéité appelés ci-dessous joints sont nécessaires. La figure 1 représente le montage d'un tel joint sur l'arbre. L'arbre 1 comporte sur sa face externe trois portées cylindriques 2, 3 et 4 destinées à recevoir les parties correspondantes 10 et 11 d'une virole 6 de joint labyrinthe. Entre les portées 3 et 4 une gorge 5 à section transversale en arc de cercle a été usinée; conformément à l'invention, la surface torique ainsi définie par le fond de la gorge est excentrée par rapport à l'axe de l'arbre comme cela apparaît sur la figure 1.

Le joint labyrinthe est constitué d'une virole cylindrique 6 qui comprend sur sa face externe une série de léchettes 7 circulaires situées dans des plans radiaux parallèles les uns aux autres. Ces léchettes coopérant avec des surfaces d'étanchéité non représentées montées concentriquement à l'arbre sur un élément statorique de la turbomachine.

En prolongement de ces léchettes la virole comprend une partie cylindrique plus épaisse 61 sur laquelle sont prévus les moyens de fixation du labyrinthe sur l'arbre. A cet effet, une pluralité de perçages radiaux 8 sont répartis dans un plan transversal à l'intérieur d'un arc de cercle; dans le mode de réalisation représenté, on prévoit sept perçages répartis sur une demi-circonférence, perpendiculairement a chacun des perçages une fente 9 axiale traverse de part en part la partie cylindrique 61 de la virole, à proximité de sa face externe.

Les moyens de fixation sont constitués par un segment 12 des pions cylindriques 16 et des plaquettes de verouillage 17.

Le segment 12 est un secteur d'anneau conformé de façon à venir s'ajuster entre la portée 11 de la virole 6 et le fond 13 de la gorge 5, il est symétrique par rapport à un plan radial passant par l'axe de l'arbre et l'axe excentré de la gorge. Afin de permettre son montage, le segment est coupé dans sa partie la plus mince sur environ un quart de la circonférence. Il comporte une pluralité de perçages radiaux 15 correspondant aux perçages 8 de la virole, un pion cylindrique 16 de fixation vient se loger dans chacun des trous radiaux formés des perçages 8 et 15 alignés. Chacun des pions est immobilisé radialement entre le fond de la gorge et une plaquette de clinquant 17 glissée dans la fente 9, cette plaquette 17 comporte une cuvette 18 en son milieu, dont la convexité vient se loger dans les perçages 8 vérouillant ainsi les pions radialement et les plaquettes axialement.

Le procédé de montage apparaît clairement au vue de la description qui précède. La première étape consiste à ajuster le segment dans la gorge en prenant soin de le placer symétriquement par rapport au point de profondeur maximal de la gorge. Dans cette position, sa face externe 14 est ainsi dans le prolongement des portées 3 et 4. La seconde étape consiste à faire coulisser la virole 6 sur l'arbre jusqu'à ce que la portée 10 vienne en appui sur la portée 2 et, que la portée 11 chevauche les portées 3 et 4 ainsi que le segment 12; en position les perçages 8 coïncident avec les perçages 15. On immobilise enfin le labyrinthe en introduisant les pions 16 dans leur logement et on vérouille l'ensemble au moyen des plaquettes 17 dont on fait coïncider les cuvettes 18 avec les trous 8.

Pour le démontage du joint labyrinthe, on procède de façon inverse: on retire les plaquettes de clinquant libérant ainsi les pions de fixation qui une fois enlevés permettent le coulissement et le retrait du joint labyrinthe de l'arbre.

En fonctionnement en cas de frottement du labyrinthe sur la garniture d'étanchéité la virole ne peut être entraînée en rotation autour de l'arbre car le segment vient en butée contre le fond de la gorge. Les efforts tangentiels transmis du labyrinthe à l'arbre se répartissent sensiblement uniformément sur la surface du fond de la gorge évitant ainsi les surcontraintes locales.

Cependant, en cas de frottement important du labyrinthe contre la garniture d'étanchéité, l'échauffement peut être suffisant pour entraîner une dilatation de la virole et du segment telle, qu'un jeu apparaisse; le segment n'est alors plus en butée contre le fond de la gorge et n'assure plus l'immobilisation du labyrinthe.

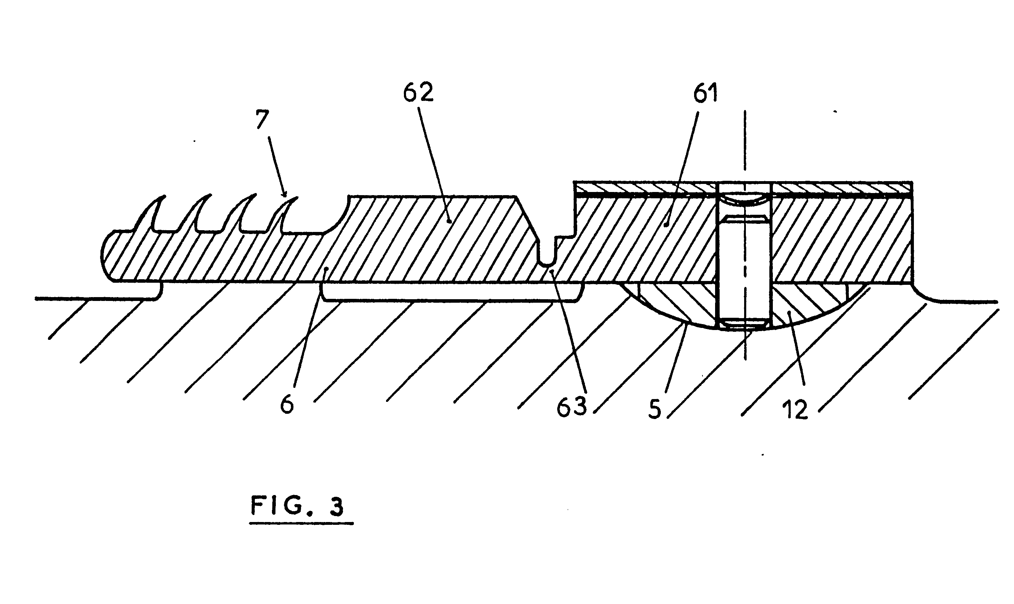

Pour éliminer ce risque on prévoit un moyen retardant la propagation de la chaleur entre les léchettes et l'élément de liaison. La figure 3 montre une variante de virole appliquant ce principe. Entre les léchettes 7 et la partie cylindrique de fixation 61, on a ménagé une masse thermique 62 où la virole est plus épaisse, formant ainsi un puits de chaleur pour les calories engendrées par frottement au niveau des léchettes. Afin de limiter la conduction de chaleur entre la masse 62 et la partie 61, celles-ci sont reliées par un col thermique 63 d'épaisseur réduite.

## Revendications

1. Moyen de fixation sur un arbre (1) de turbomachine, d'un joint (6) d'étanchéité en forme de virole cylindrique comportant notamment des léchettes (7) sur sa face externe caractérisé par un segment annulaire (12) logé dans une gorge annulaire (5) de forme complémentaire au dit segment menagée dans la paroi de l'arbre, et en appui contre la surface interne du joint (6), l'épaisseur du segment et la profondeur correspondante de la gorge variant le long de la circonférence de sorte que le joint est immobilisé par rapport à l'arbre lorsque le segment est solidarisé au joint par un moyen de fixation amovible (16).

2. Moyen de fixation selon la revendication précédente caractérisé en ce que le moyen de fixation amovible du segment au joint (6) est constitué par au moins un pion cylindrique (16) logé dans un perçage rayonnant commun (8 et 15) au dit joint (6) et au segment (12).

3. Moyen de fixation selon la revendication précédente caractérisé en ce que un moyen de verrouillage (17) empêche tout déplacement radial des pions de fixation.

4. Moyen de fixation selon l'une des revendications précédentes caractérisé en ce que la gorge (5) a la forme d'une surface torique excentrée par rapport à l'axe commun de l'arbre (1) et du joint (6).

5. Moyen de fixation selon la revendication précédente caractérisé en ce que le segment (12) est en forme de secteur d'anneau symétrique par rapport à sa section transversale d'épaisseur maximale correspondant à la profondeur maximale de la gorge (5) et coupé à sa partie la plus mince afin de permettre l'introduction du segment dans la gorge.

6. Moyen de fixation selon l'une des revendications 4 et 5 caractérisé en ce que la virole (6) du joint d'étanchéité comprend dans le prolongement des léchettes (7) une partie cylindrique (61) pourvue d'une pluralité de perçages rayonnants (15) coopérant avec des perçages correspondants dans le segment (12) pour le logement des pions de fixation (16).

7. Moyen de fixation selon la revendication 6 caractérisé en ce que les pions (16) sont verrouillés radialement chacun par une plaquette de clinquant (17) logée dans une fente (9) longitudinale ménagée dans la partie cylindrique (61) de la virole (6) perpendiculairement aux perçages 8 et en ce que les plaquettes sont elles-mêmes verrouillées axialement par une cuvette (18) dans leur partie centrale qui vient se loger dans les perçages (8).

8. Moyen de fixation selon l'une des revendications 6 et 7 caractérisé en ce que la virole (6) est pourvue entre les léchettes (7) et la partie cylindrique (61) d'une section épaisse (62) suivie d'une section mince (63) jouant le rôle de masse thermique respectivement de col thermique afin de limiter la propagation de la chaleur entre les léchettes et les éléments de fixation du joint sur l'arbre.

## Patentansprüche

1. Mittel zur Befestigung einer Dichtung (6) an einer Turbomaschinenwelle (1), wobei die Dichtung die Form eines zylindrischen, an seiner Außenseite vorzugsweise mit Streichzungen (7) versehenen Ringmantels hat, gekennzeichnet durch ein ringförmiges Segment (12), das in einer in der Wandung der Welle angebrachten ringförmigen Kehle (5) mit einer zur Form des Segments komplementären Form aufgenommen ist und an der Innenfläche der Dichtung (6) anliegt, wobei die Dicke des Segments und die entsprechende Tiefe der Kehle sich über den Umfang derart ändern, daß die Dichtung gegenüber der Welle festgelegt ist, wenn das Segment durch ein lösbares Befestigungselement (16) fest mit der Dichtung verbunden ist.

2. Befestigungsmittel nach dem vorhergehenden Anspruch, dadurch gekennzeichnet, daß das lösbare Befestigungselement zur Fixierung des Segments an der Dichtung (6) von wenigstens einem zylindrischen Stift (16) gebildet ist, der in einer Öffnung (8 bzw. 15) aufgenommen ist, die die Dichtung (6) und das Segment (12) gemeinsam radial durchdringt.

3. Befestigungsmittel nach dem vorhergehenden Anspruch, dadurch gekennzeichnet, daß ein Verriegelungsmittel (17) vorgesehen ist, das jede radiale Verschiebung der genannten Stifte verhindert.

4. Befestigungsmittel nach einem der vorhergehenden Ansprüche, dadurch gekennzeichnet, daß die Kehle (5) die Form einer relativ zur gemeinsamen Achse der Welle (1) und der Dichtung (6) exzentrischen Torusfläche hat.

5. Befestigungsmittel nach dem vorhergehenden Anspruch, dadurch gekennzeichnet, daß das Segment (12) die Form eines relativ zu seinem der maximalen Tiefe der Kehle (6) entsprechenden Querschnitt größter Dicke symmetrischen Ringsektors hat, der in seinem dünnsten Teil durchtrennt ist, um ein Einbringen des Segments in die Kehle zu ermöglichen.

6. Befestigungsmittel nach einem der Ansprüche 4 und 5, dadurch gekennzeichnet, daß der Ringmantel (6) der Dichtung in Verlängerung der Streichzungen (7) einen zylindrischen Teil (61) aufweist, der mit einer Mehrzahl von radialen Öffnungen (15) versehen ist, die mit entsprechenden Öffnungen in dem Segment (12) zur Aufnahme der Fixierungsstifte (16) zusammenwirken.

7. Befestigungsmittel nach Anspruch 6, dadurch gekennzeichnet, daß jeder der Stifte (16) durch eine Beilagplatte (17), die in einem in dem zylindrischen Teil (61) des Ringmantels (6) senkrecht zu den Öffnungen (8) angebrachten Längsschlitz (9) aufgenommen ist, in radialer Richtung blockiert ist, und daß die Platten ihrerseits in axialer Richtung durch eine in ihrem mittleren Bereich angeordnete Mulde (18), die sich in die genannte Öffnung (8) einfügt, verriegelt sind.

8. Befestigungsmittel nach einem der Ansprüche 6 und 7, dadurch gekennzeichnet, daß der Ringmantel (6) zwischen den Streichzungen und dem zylindrischen Teil (61) einen Abschnitt (62) großer Wandstärke aufweist, auf den ein Abschnitt (63) geringer Wandstärke folgt, und daß diese Abschnitte eine thermische Masse bzw. eine thermische Einsattelung bilden, um die Wärmeausbreitung zwischen den Streichzungen und den Elementen zur Befestigung der Dichtung an der Welle zu begrenzen.

## Claims

1. Means for securing onto a shaft (1) of a turbo machine, a fluidtight seal (6) in the form of a cylindrical member comprising in particular lips (7) on its outer face characterized by an annular segment (12) located in an annular groove (5) of shape complementary to the said segment provided in the wall of the shaft, and abutting against the inner surface of the seal (6), the thickness of the segment and the corresponding depth of the groove varying along the length of the circumference so that the seal is fixed with respect to the shaft when the segment is made rigid with the seal by means of a detachable securing means (16).

2. Securing means according to the preceding claim characterized in that the detachable securing means of the segment to the seal (6) takes the form of at least one cylindrical pin (6) located in a radial bore common (8 and 15) to the said seal (6) and to the segment (12).

3. Securing means according to the preceding claim characterized in that a locking means (17) prevents any radial displacement of the securing pins.

4. Securing means according to one of the preceding claims characterized in that the groove (5) has the shape of a toroidal surface eccentric with respect to the common axis of the shaft (1) and of the seal (6).

5. Securing means according to the preceding claim characterized in that the segment (12) is in the shape of a sector of a ring symmetrical with respect to its cross section of maximum thickness corresponding to the maximum depth of the groove (5) and cut at its thinnest part in order to enable the introduction of the segment into the groove.

6. Securing means according to one of claims 4 and 5 characterized in that the member (6) of the fluidtight seal comprises in the extension of the lips (7) a cylindrical part (61) provided with a plurality of radial bores (15) cooperating with corresponding bores in the segment (12) for the location of the securing pins (16).

7. Securing means according to claim 6 characterized in that the pins (16) are radially locked each by a foil-like plate (17) located in a longitudinal slot (9) provided in the cylindrical part (61) of the annular member (6) perpendicularly to the bores 8 and in that the plates are themselves axially locked by a dished part (18) in their central part which locates itself in the bores (8).

8. Securing means according to one of claims 6 and 7 characterized in that the annular member (6) is provided between the lips (7) and the cylindrical part (61) of thick section (62) followed by a thin section (63) playing the role of a thermal mass respectively as a thermal neck in order to limit the propagation of heat between the lips and the securing elements of the seal on the shaft.

FIG. 1

FIG. 2

FIG. 3